(19) Europäisches Patentamt

European Patent Office

Office européen des brevets

(11) **EP 4 667 968 A1**

(12) **EUROPEAN PATENT APPLICATION**
published in accordance with Art. 153(4) EPC

(43) Date of publication:
**24.12.2025 Bulletin 2025/52**

(21) Application number: **23923351.3**

(22) Date of filing: **23.02.2023**

(51) International Patent Classification (IPC):
*G01S 13/60* (2006.01)

(52) Cooperative Patent Classification (CPC):
**G01S 13/60**

(86) International application number:
**PCT/CN2023/077953**

(87) International publication number:
**WO 2024/174174 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventor: **CHEN, Gaoxiang
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **DATA PROCESSING METHOD OF RADAR SENSOR, AND RELATED APPARATUS**

(57) A data processing method for a radar sensor and a related apparatus are provided. In the method, an echo signal is generated after a transmit antenna transmits a signal to a target object. A data processing device determines a two-dimensional spectrum of the target object based on the echo signal (S501), selects a plurality of detection points from the two-dimensional spectrum (S502), determines channel data of the plurality of detection points based on echo data of the plurality of detection points in the echo signal (S503), determines evaluation values of the plurality of detection points based on the channel data of the plurality of detection points (S504), selects at least one target detection point from the plurality of detection points based on the evaluation values of the plurality of detection points (S505), and determines orientation information of the target object based on channel data of the at least one target detection point (S506). An evaluation value of any detection point is used to reflect accuracy of the orientation information that is of the target object and that is determined based on the channel data of the detection point. Therefore, the orientation information of the target object is determined more accurately based on channel data of a target detection point obtained through filtering performed based on an evaluation value.

A data processing device obtains an echo signal obtained after a radar sensor transmits a signal to a target object, and determines a two-dimensional spectrum of the target object based on the echo signal — S501

The data processing device selects a plurality of detection points from the two-dimensional spectrum — S502

The data processing device determines channel data of the plurality of detection points based on echo data of the plurality of detection points in the echo signal — S503

The data processing device determines evaluation values of the plurality of detection points based on the channel data of the plurality of detection points — S504

The data processing device selects at least one target detection point from the plurality of detection points based on the evaluation values of the plurality of detection points — S505

The data processing device determines orientation information of the target object based on channel data of the at least one target detection point — S506

FIG. 5

EP 4 667 968 A1

**Description**

TECHNICAL FIELD

This application relates to the field of sensing technologies, and in particular, to a data processing method for a radar sensor and a related apparatus.

BACKGROUND

A radar sensor has capabilities of distance measurement, speed measurement, and angle measurement, and is widely used in autonomous driving environment sensing. In the field of vehicle-mounted radars, a vehicle-mounted radar sensor transmits an electromagnetic wave, and processes an echo signal reflected by a target object, to obtain orientation information of the target object. The orientation information includes information such as a relative distance between the target object and the radar sensor, a relative speed between the target object and the radar sensor, and an azimuth angle and a pitch angle of the target object.

However, if an orientation of the target object is directly determined based on the echo signal, the determined orientation information of the target object may be inaccurate.

SUMMARY

This application provides a data processing method for a radar sensor and a related apparatus, to improve accuracy of sensing orientation information of a surrounding target object by the radar sensor.

According to a first aspect, an embodiment of this application provides a data processing method for a radar sensor. The method may be applied to a data processing device. The method includes the following steps.

First, the data processing device obtains an echo signal obtained after the radar sensor transmits a signal to a target object, and determines a two-dimensional spectrum of the target object based on the echo signal. The two-dimensional spectrum may indicate relationships between both a first distance and a first relative speed and an energy value of the echo signal, the first distance is a relative distance between the radar sensor and the target object, and the first relative speed is a relative speed between the radar sensor and the target object. Then, the data processing device selects a plurality of detection points from the two-dimensional spectrum, and determines channel data of the plurality of detection points based on echo data of the plurality of detection points in the echo signal. After that, the data processing device determines evaluation values of the plurality of detection points based on the channel data of the plurality of detection points. An evaluation value of any detection point may be used to reflect accuracy of orientation information that is of the target object and that is determined based on channel data of the detection point. Finally, the data processing device selects at least one target detection point from the plurality of detection points based on the evaluation values of the plurality of detection points, and determines the orientation information of the target object based on channel data of the at least one target detection point.

According to the foregoing method, the data processing device determines the two-dimensional spectrum of the target object based on the echo signal. The echo signal is obtained after the radar sensor transmits the signal to the target object. The two-dimensional spectrum indicates the relationships between both the first distance and the first relative speed and the energy value of the echo signal, the first distance is the relative distance between the radar sensor and the target object, and the first relative speed is the relative speed between the radar sensor and the target object. Therefore, in the plurality of detection points selected in the two-dimensional spectrum, each detection point may indicate a group of relationships between both the first distance and the first relative speed and the energy value of the echo signal. The data processing device determines the channel data of the plurality of detection points based on the echo data of the plurality of detection points in the echo signal, and then determines the evaluation values of the plurality of detection points based on the channel data of the plurality of detection points. Because the evaluation value of any detection point may be used to reflect the accuracy of the orientation information that is of the target object and that is determined based on the channel data of the detection point, the data processing device selects the at least one target detection point from the plurality of detection points based on the evaluation values of the plurality of detection points. Therefore, the orientation information that is of the target object and that is determined based on the channel data of the at least one target detection point is more accurate.

In a possible design, the method may be applied to the data processing device. The data processing device may be a data processing module built in the radar sensor, or may be an electronic device that is independent of the radar sensor and that has a data processing function and a data transmission function. When the data processing device is the data processing module built in the radar sensor, the data processing module obtains the echo signal of the radar sensor, generates the orientation information of the target object, and sends, by using the data transmission module of the radar sensor, the orientation information of the target object to a vehicle or another device on which the radar sensor is disposed. When the data processing device is the electronic device that is independent of the radar sensor and that has the data processing function and the data transmission function, the electronic device obtains the echo signal from the radar sensor, generates the orientation information of the target object, and sends the orientation information of the target object to a vehicle or another device on which the radar sensor is disposed.

In a possible design, that the data processing device selects at least one target detection point from the plurality of detection points based on the evaluation values of the plurality of detection points includes:

First, the data processing device clusters the plurality of detection points based on feature information of the plurality of detection points, to obtain a plurality of detection point sets. Each detection point set includes a plurality of detection points, and feature information of any detection point indicates a first distance and a first relative speed that correspond to the detection point in the two-dimensional spectrum. Then, for any first detection point set of the plurality of detection point sets, in one case, there is a detection point whose evaluation value is less than a first evaluation value threshold in the first detection point set, and in this case, the data processing device uses the detection point whose evaluation value is less than the first evaluation value threshold as the target detection point. In another case, there is no detection point whose evaluation value is less than a first evaluation value threshold in the first detection point set, and in this case, the data processing device uses a detection point with a smallest evaluation value as the target detection point.

According to the foregoing method, because the feature information of any detection point may indicate the first distance and the first relative speed that correspond to the detection point in the two-dimensional spectrum, after the data processing device clusters the plurality of detection points based on the feature information of the plurality of detection points, the plurality of detection points included in each detection point set of the obtained plurality of detection point sets have first distances and first relative speeds that are close to each other. In such a design, points corresponding, on the target object, to the plurality of detection points in each detection point set are also close enough. In addition, for any first detection point set in the plurality of detection point sets, whether the detection point whose evaluation value is less than the first evaluation value threshold or the detection point with the smallest evaluation value is used as the target detection point is determined based on whether there is the detection point whose evaluation value is less than the first evaluation value threshold in the first detection point set. In different cases, target detection points are respectively determined in different manners based on the evaluation values, so that the determined target detection point can be used to determine the orientation information of the target object more accurately.

In a possible design, the first detection point set meets the following conditions:

a difference between a maximum distance and a minimum distance is less than a distance threshold, and a difference between a maximum speed and a minimum speed is less than a speed threshold. The first detection point set includes a plurality of first detection points, the maximum distance is a first distance with a maximum value in feature information of the plurality of first detection points, the minimum distance is a first distance with a minimum value in the feature information of the plurality of first detection points, the maximum speed is a first relative speed with a maximum value in the feature information of the plurality of first detection points, and the minimum speed is a first relative speed with a minimum value in the feature information of the plurality of first detection points.

According to the foregoing method, because the difference between the first distance with the maximum value in the feature information of the plurality of first detection points and the first distance with the minimum value in the feature information of the plurality of first detection points is less than the distance threshold, the data processing device may determine that first distances indicated by the plurality of first detection points included in the first detection point set are close enough. Because the difference between the first relative speed with the maximum value in the feature information of the plurality of first detection points and the first relative speed with the minimum value in the feature information of the plurality of first detection points is less than the speed threshold, the data processing device may determine that first relative speeds indicated by the plurality of first detection points included in the first detection point set are close enough. In such a design, locations of the plurality of first detection points included in the first detection point set are close enough to locations of points on the target object. Therefore, the target detection point determined in the first detection point set by the data processing device can indicate the location of the point on the target object more accurately.

In a possible design, that the data processing device selects at least one target detection point from the plurality of detection points based on the evaluation values of the plurality of detection points includes:

The data processing device determines at least one energy threshold based on energy values of the plurality of detection points, and determines, in the plurality of detection points, at least one detection point associated with each energy threshold. A first energy threshold is any one of the at least one energy threshold, and an energy value of at least one detection point associated with the first energy threshold is less than the first energy threshold. When there is a detection point whose evaluation value is less than a second evaluation value threshold in the at least one detection point associated with the first energy threshold, the data processing module uses the detection point whose evaluation value is less than the second evaluation value threshold as the target detection point. When there is no detection point whose evaluation value is less than a second evaluation value threshold in the at least one detection point associated with the first energy threshold, the data processing module uses a detection point with a smallest evaluation value as the target detection point. The second evaluation value threshold is an evaluation value corresponding to the first energy threshold.

According to the foregoing method, because the energy value of the at least one detection point associated with the first energy threshold is less than the first energy threshold, there are two cases for performing filtering on the at least one detection point associated with the first energy threshold based on a value relationship between the evaluation value and the second evaluation value threshold, including there is the detection point whose evaluation value is less than the second evaluation value threshold, and there is no detection point whose evaluation value is less than the second evaluation value threshold. For the two cases, the detection point whose evaluation value is less than the second evaluation value threshold is used as the target detection point or the detection point with the smallest evaluation value is used as the target detection point respectively. In different cases, target detection points are respectively determined in different manners based on the evaluation values, so that the determined target detection point can be used to determine the orientation information of the target object more accurately.

In a possible design, that the data processing device determines evaluation values of the plurality of detection points based on the channel data of the plurality of detection points includes but is not limited to the following four manners for determining the evaluation value.

First manner: The data processing device determines a spatial spectrum of a second detection point based on channel data of the second detection point, where the spatial spectrum indicates energy distribution of a signal at the second detection point, and uses a main lobe width or a side lobe depth of the spatial spectrum as an evaluation value of the second detection point.

Second manner: The data processing device extracts, from a spatial spectrum of a second detection point, an angle value of an angle of the second detection point relative to a normal direction of the radar sensor, and then determines a channel data component of the second detection point based on the angle value, and determines an evaluation value of the second detection point based on channel data of the second detection point and the channel data component of the second detection point. The channel data component is channel data present when a propagation path between the radar sensor and the target object is a direct path, and the angle is an angle at which the propagation path between the radar sensor and the target object is a direct path.

Third manner: The data processing device determines an angle of departure and an angle of arrival of a signal at a second detection point based on channel data of the second detection point, and determines an absolute value of a difference between the angle of departure and the angle of arrival as an evaluation value of the second detection point.

Fourth manner: The data processing device determines an energy standard deviation of a second detection point based on channel data of the second detection point and channel data of a detection point associated with the second detection point, and determines the energy standard deviation as an evaluation value of the second detection point. The energy standard deviation indicates an energy fluctuation status of a signal at the second detection point, and the detection point associated with the second detection point is a detection point in a first specified range around the second detection point.

The second detection point is any one of the plurality of detection points.

According to the foregoing method, because the spatial spectrum may indicate energy distribution in space, the evaluation value determined by the data processing device in the first manner may indicate the energy distribution of the signal at the second detection point in space.

A detection point in a case in which the propagation path between the radar sensor and the target object is a reflection path cannot accurately indicate a point on the target object. In this case, the data processing device may obtain, through filtering, the channel data present when the propagation path between the radar sensor and the target object is a direct path. Therefore, the evaluation value of the second detection point determined by the data processing device in the second manner may indicate a proportion of the signal at the second detection point in a case in which the propagation path is a direct path.

In a case in which a propagation path of a transmitted signal is a reflection path, reflection may be generated by using an object in an environment. Therefore, the data processing device determines the evaluation value of the second detection point in the third manner, and removes the case in which the propagation path is a reflection path from a perspective of signal transmission and reception, so that accuracy of the second detection point is further ensured.

The evaluation value of the second detection point determined by the data processing device in the third manner ensures the accuracy of the second detection point from a perspective of energy fluctuation.

Therefore, when the data processing device calculates the evaluation value of the second detection point in any manner, it can be ensured that the obtained evaluation value can be used to reflect accuracy of orientation information that is of the target object and that is determined based on channel data of a corresponding detection point.

In a possible design, before determining the evaluation values of the plurality of detection points based on the channel data of the plurality of detection points, the data processing device first determines that an energy value of each of the plurality of detection points is greater than a specified energy threshold.

According to the foregoing method, a detection point with a low energy value may be generated due to noise interference, or may be generated due to a reflection path case. Therefore, a detection point whose energy value is less than the specified energy threshold is first filtered out. In this way, a data processing amount can be reduced, and data processing accuracy can also be improved.

According to a second aspect, an embodiment of this application provides a data processing apparatus. The apparatus includes an obtaining unit and a processing unit.

The obtaining unit is configured to: obtain an echo signal obtained after a radar sensor transmits a signal to a target object, and determine a two-dimensional spectrum of the target object based on the echo signal. The two-dimensional spectrum indicates relationships between both a first distance and a first relative speed and an energy value of the echo signal, the first distance is a relative distance between the radar sensor and the target object, and the first relative speed is a relative speed between the radar sensor and the target object.

The processing unit is configured to: select a plurality of detection points from the two-dimensional spectrum; determine channel data of the plurality of detection points based on echo data of the plurality of detection points in the echo signal; determine evaluation values of the plurality of detection points based on the channel data of the plurality of detection points, where an evaluation value of any detection point is used to reflect accuracy of orientation information that is of the target object and that is determined based on channel data of the detection point; select at least one target detection point from the plurality of detection points based on the evaluation values of the plurality of detection points; and determine the orientation information of the target object based on channel data of the at least one target detection point.

According to a third aspect, an embodiment of this application provides a data processing device. The data processing device includes a processor and a memory.

The memory is configured to store computer program instructions.

The processor is configured to read the computer program instructions stored in the memory, so that the data processing device implements the method according to any one of the foregoing aspects.

According to a fourth aspect, an embodiment of this application further provides a computer-readable storage medium. The computer-readable storage medium stores a computer program, and when the computer program is executed by a computer, the computer is enabled to perform the method according to any one of the foregoing aspects.

According to a fifth aspect, an embodiment of this application further provides a computer program product. When a computer program is run on a computer, the computer is enabled to perform the method according to any one of the foregoing aspects.

According to a sixth aspect, an embodiment of this application further provides a chip. The chip includes a processor and a memory. The processor is coupled to the memory, and the processor is configured to read a computer program stored in the memory, so that the chip performs the method according to any one of the aspects.

BRIEF DESCRIPTION OF DRAWINGS

FIG. 1 is a diagram of an application scenario according to an embodiment of this application;
FIG. 2 is a diagram of an architecture of a radar sensor according to an embodiment of this application;
FIG. 3 is a diagram of a signal propagation path in a multipath scenario according to an embodiment of this application;
FIG. 4 is a diagram of distribution of energy of a direct path and energy of a reflection path in a distance dimension according to an embodiment of this application;
FIG. 5 is a flowchart of a data processing method for a radar sensor according to an embodiment of this application;
FIG. 6a is a diagram of distribution of detection points according to an embodiment of this application;
FIG. 6b is a diagram of obtaining a target detection point through filtering in a clustering manner according to an embodiment of this application;
FIG. 6c is a diagram of obtaining a target detection point through filtering in a manner of comparing peak values of energy according to an embodiment of this application;
FIG. 7 is a diagram of a complete procedure of a data processing method for a radar sensor according to an embodiment of this application;
FIG. 8 is a diagram of a complete procedure of another data processing method for a radar sensor according to an embodiment of this application;
FIG. 9 is a diagram of a complete procedure of another data processing method for a radar sensor according to an embodiment of this application;
FIG. 10 is a diagram of a structure of a data processing apparatus for a radar sensor according to an embodiment of this application;
FIG. 11 is a diagram of a structure of a data processing device according to an embodiment of this application; and
FIG. 12 is a diagram of a structure of an electronic device according to an embodiment of this application.

DESCRIPTION OF EMBODIMENTS

"A plurality of" in embodiments of this application indicates two or more.

It should be noted that the term "and/or" in this specification describes only an association relationship for describing associated objects and indicates that three relationships may exist. For example, A and/or B may indicate the following three cases: Only A exists, both A and B exist, and only B exists. In addition, unless otherwise specified, the character "/" in this specification generally indicates an "or" relationship between the associated objects. In addition, in descriptions of embodiments of the present invention, terms such as "first" and "second" are merely used for distinction and description, and shall not be understood as an indication or implication of relative importance or an indication or implication of a sequence.

The following describes some terms in embodiments of this application, to facilitate understanding of a person skilled in the art.

(1) Spectrum: The spectrum includes an amplitude spectrum, a phase spectrum, and an energy spectrum. A two-dimensional spectrum means relationships between variables of two dimensions and an amplitude, a phase, or energy. The two-dimensional spectrum in embodiments of this application may be a two-dimensional energy spectrum, the variables of the two dimensions may be a speed and a distance, and the two-dimensional energy spectrum may indicate relationships between both the speed and distance and the energy.

(2) Spatial spectrum: A signal in space is received by using a sensor array, and the received signal is processed, so that energy distribution of the signal in each direction of the space is obtained. The spatial spectrum is used to estimate a source position.

(3) Constant false alarm rate detection: A false alarm rate means a probability that a detection device incorrectly determines, in a unit time, a noise or another interference signal as a signal that threatens a radiation source. During radar signal detection, when external interference strength changes, a radar can automatically adjust sensitivity of the radar, so that a false alarm rate of the radar remains constant. This feature is referred to as a constant false alarm rate feature.

(4) Main lobe: The main lobe is a maximum radiation beam in an antenna pattern. The main lobe is related to antenna directivity. The antenna directivity means a relationship between a relative value of an antenna radiation field and a spatial direction at a same distance in a far field. In some examples, the antenna directivity is indicated by the antenna pattern. Because the antenna pattern is generally in a petal shape, the antenna pattern is also referred to as a lobe pattern, and a beam within first lines in a zero radiation direction on two sides of a maximum radiation direction is referred to as the main lobe.

(5) Side lobe: The side lobe is also referred to as a sidelobe. In a radiation pattern of an antenna, there is a largest quantity of side lobes. Lobes other than a main lobe are all side lobes. Generally, a first side lobe is a largest one among all side lobes.

(6) Peak value: The peak value is a local concept. The peak value merely indicates that a function value of a specific point is greater than function values of points near the point, but does not mean that the function value is the largest in an entire domain of a function.

(7) Data processing device: The data processing device is a device that can calculate and process an echo signal of a radar sensor, and may be integrated into a specific device, or may be an independent device.

The following describes some possible application scenarios of this application as examples.

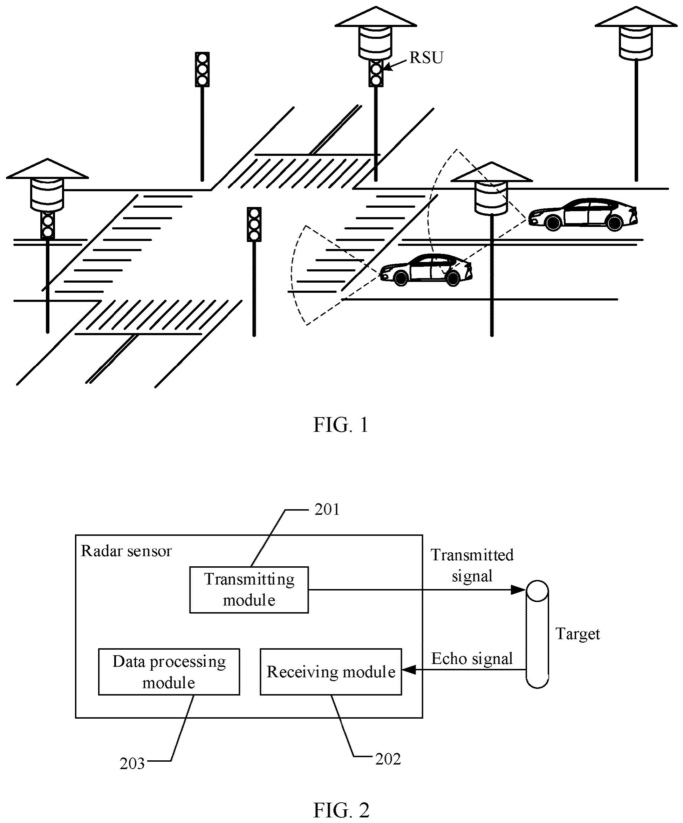

FIG. 1 is a diagram of an application scenario according to an embodiment of this application. In this application scenario, an example in which a radar sensor is mounted on a vehicle and the vehicle travels on a road is used. The vehicle may be, for example, an unmanned vehicle, an intelligent vehicle, an electric vehicle, or a digital vehicle. The radar sensor may be deployed at various locations of the vehicle. For example, the radar sensor may be deployed in any one or more directions of four directions: front, rear, left, and right of the vehicle, to capture information about an ambient environment of the vehicle. An example in which the radar sensor is deployed in front of the vehicle is used in FIG. 1. The radar sensor can sense a sector area shown in a dashed box in FIG. 1, and the sector area may be referred to as a detection area of the radar sensor.

In a possible implementation, the radar sensor may obtain, in real time or periodically, longitude and latitude, a speed, and an orientation of the vehicle, or orientation information of a target object (for example, another surrounding vehicle) within a specific range (for example, a distance of the target object, a movement speed of the target object, a posture of the target object, or a grayscale image of the target object). The radar sensor or the vehicle may determine or adjust a location, route planning, and/or the like of the vehicle based on the orientation information. For example, the radar sensor may determine the location of the vehicle based on the longitude and latitude, determine a traveling direction and destination of the vehicle in a future time period based on the speed and the orientation, determine a quantity and density of obstacles around the vehicle based on a distance from a surrounding object, or the like. Optionally, the vehicle may further implement assisted driving, autonomous driving, or the like of the vehicle with reference to a function of an advanced driving assistance system (advanced driving assistance system, ADAS).

It should be understood that a principle of detecting the orientation information of the target by the radar sensor is as follows: The radar sensor transmits a signal in a specific direction. If there is a target object in the detection area of the radar sensor, the target object may reflect the received signal to the radar sensor (the reflected signal may be referred to as an echo signal), and then the radar sensor determines the orientation information of the target based on the echo signal.

It should be noted that the foregoing application scenario is merely an example. The radar sensor provided in this application may be further used in a plurality of other possible scenarios, and is not limited to the scenario shown in the foregoing example. For example, the radar sensor may be further mounted on an uncrewed aerial vehicle as a vehicle-mounted radar. For another example, the radar sensor may also be mounted in a roadside unit (roadside unit, RSU), and is used as a roadside traffic radar sensor, so that intelligent vehicle-road cooperative communication can be implemented. For still another example, the radar sensor may be mounted on an automated guided vehicle (automated guided vehicle, AGV). The AGV is a transport vehicle equipped with an automatic navigation apparatus, for example, an electromagnetic or optical navigation apparatus, capable of traveling along a specified navigation path, and having security protection and various load transfer functions. Details are not enumerated herein.

It should be noted that the application scenarios described in this application are intended to describe the technical solutions in this application more clearly, and do not constitute a limitation on the technical solutions provided in this application. A person of ordinary skill in the art may learn that, with emergence of new application scenarios, the technical solutions provided in this application are also applicable to a similar technical problem.

Based on the foregoing content, the radar sensor may be used in fields such as unmanned driving, autonomous driving, assisted driving, intelligent driving, networked vehicles, security monitoring, remote interaction, mapping, or artificial intelligence.

In embodiments of this application, a data processing device may be a data processing module integrated into the radar sensor, or may be an electronic device that is independent of the radar sensor and that has a data processing function and a data transmission function.

In some embodiments, the data processing device may be the data processing module integrated into the radar sensor. The data processing module obtains the echo signal obtained after the radar sensor transmits the signal to the target object, determines the orientation information of the target object, and sends, by using a data transmission module of the radar sensor, the orientation information to a controller of the vehicle on which the radar sensor is disposed, so that the controller of the vehicle determines or adjusts the location and/or path planning of the vehicle based on the orientation information of the target object.

FIG. 2 is a diagram of an architecture of a radar sensor according to an embodiment of this application. The radar sensor may include a transmitting module 201, a receiving module 202, and a data processing module 203. The transmitting module 201 is configured to transmit a signal. The receiving module 202 is configured to receive an echo signal obtained by reflecting the signal by a target object in a detection area. It may also be understood that, after the echo signal from the detection area is propagated by the receiving module 202, the data processing module 203 is configured to process the received echo signal, to obtain orientation information of the target object.

In some other embodiments, a data processing device may be an electronic device that is independent of the radar sensor and that has a data processing function and a data transmission function. The electronic device may be disposed inside a vehicle, or may be disposed outside a vehicle. The electronic device obtains, based on the data transmission function, the echo signal obtained after the radar sensor transmits the signal to the target object, determines, based on the data processing function, the orientation information of the target object based on the echo signal, and then sends, based on the data transmission function, the orientation information to the controller of the vehicle on which the radar sensor is disposed, so that the controller of the vehicle determines or adjusts the location and/or path planning of the vehicle based on the orientation information of the target object.

In an actual application process, the orientation information that is of the target object and that is determined directly based on the echo signal may be inaccurate. Generally, there are the following two reasons for which the determined orientation information of the target object is inaccurate.

Reason 1: The echo signal includes noise.

Generally, a higher signal-to-noise ratio indicates higher accuracy of orientation information that is of the target object and that is determined through parameter estimation. Therefore, when the echo signal includes the noise, the accuracy of the determined orientation information of the target object is affected.

Reason 2: The echo signal includes a signal in a reflection path case.

In a scenario in which there is a tunnel or a guardrail, the reflection path case may occur. A reflection path means a propagation path between the radar sensor and the target object being reflected by the tunnel or the guardrail. A direct path means a propagation path between the radar sensor and the target object being a straight line path between the radar sensor and the target object.

In a case in which the propagation path is a direct path, a location of an energy peak point can reflect a real location of a point on the target object more accurately. However, in a case in which the propagation path is a reflection path, the location of the energy peak point may not necessarily reflect the real location of the point on the target object. Therefore, the case in which the propagation path is a reflection path causes interference to the case in which the propagation path is a direct path.

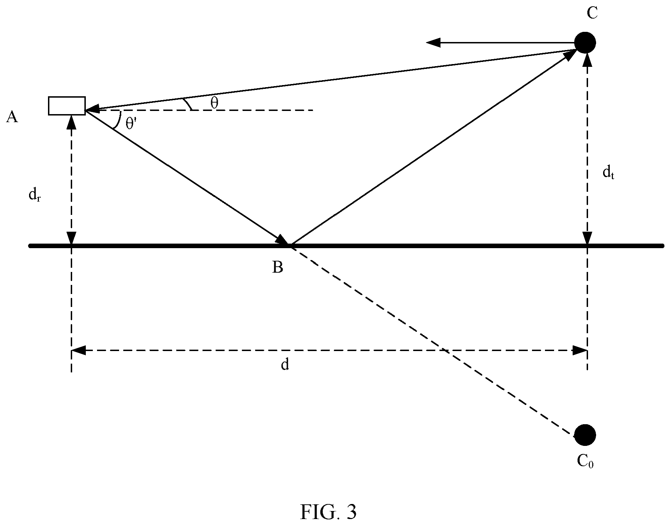

FIG. 3 is a diagram of a signal propagation path in a multipath scenario according to an embodiment of this application. A represents a location of the radar sensor, B represents a reflection point on a tunnel or a guardrail in a case in which a signal is propagated through a reflection path in a propagation process, C represents a location of the target object, and $C_0$ represents an axisymmetric point of the target object with the tunnel or the guardrail as a symmetry axis. d represents a distance between the radar sensor and the target object in a normal direction of the radar sensor, $d_t$ represents a vertical distance between the target and the tunnel or the guardrail, $d_r$ represents a vertical distance between the radar sensor and the tunnel or the guardrail, and v represents a traveling speed of the vehicle. A direct path is A->C->A, a reflection path 1 is A->B->C->B->A, a reflection path 2 is A->B->C->A, and a reflection path 3 is A->C->B->A.

For the direct path A->C->A, a propagation stroke, an angle between an echo signal and the normal direction of the radar sensor, and a Doppler velocity (a relative speed between the target object and the radar sensor) are respectively as follows:

$$r_1 = \sqrt{d^2 + (d_t - d_r)^2}$$

$$\theta = \arccos(d/r_1)$$

$$v_1 = v\cos(\theta)$$

$r_1$ is the propagation stroke in this case, $\theta$ is the angle between the echo signal and the normal direction of the radar sensor in this case, and $v_1$ is the Doppler velocity in this case.

For the reflection path 1 (A->B->C->B->A), a propagation stroke, an angle between an echo signal and the normal direction of the radar sensor, and a Doppler velocity (a relative speed between the target object and the radar sensor) are respectively as follows:

$$r_2 = \sqrt{d^2 + (d_t + d_r)^2}$$

$$\theta' = \arccos(d/r_2)$$

$$v_2 = v\cos(\theta')$$

$r_1$ is the propagation stroke in this case, θ' is the angle between the echo signal and the normal direction of the radar sensor in this case, and $v_2$ is the Doppler velocity in this case.

For the reflection path 2 (A->B->C->A) and the reflection path 3 (A->C->B->A), propagation strokes, angles between an echo signal and the normal direction of the radar sensor, and Doppler velocities (relative speeds between the target object and the radar sensor) are respectively as follows:

$$r_3 = r_4 = (r_1 + r_2)/2$$

$$v_3 = v_4 = (v_1 + v_2)/2$$

The propagation strokes in the two cases are equal, and are $r_3$ and $r_4$. The Doppler velocities in the two cases are equal, and are $v_2$ and $v_3$.

A stroke difference $\Delta r_1$ and a Doppler velocity difference $\Delta v_1$ between both the reflection path 2 (A->B->C->A) and the reflection path 3 (A->C->B->A) and the direct path (A->C->A) are respectively as follows:

$$\Delta r_1 = r_3 - r_1 = r_4 - r_1 = (r_2 - r_1)/2$$

$$\Delta v_1 = -v\frac{d}{r_1 r_2}\Delta r_1$$

A stroke difference $\Delta r_2$ and a Doppler velocity difference $\Delta v_2$ between the reflection path 1 (A->B->C->B->A) and the direct path (A->C->A) are respectively as follows:

$$\Delta r_2 = r_2 - r_1 = 2\Delta r_1$$

$$\Delta v_2 = -v\frac{d}{r_1 r_2}\Delta r_2$$

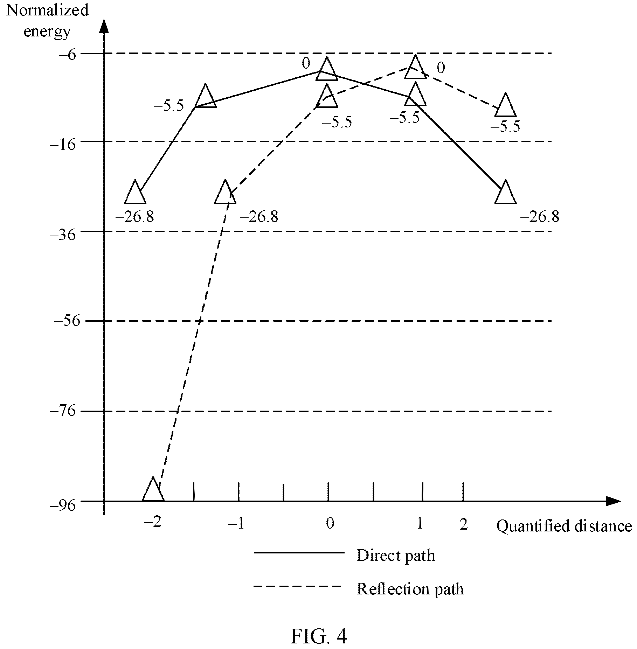

FIG. 4 is a diagram of distribution of energy of a direct path and energy of a reflection path in a distance dimension according to an embodiment of this application. For ease of illustration, a horizontal coordinate is a quantized distance, but does not indicate a real distance, indicated by a corresponding detection point, between the radar sensor and the target object; and a vertical coordinate is normalized energy, but does not indicate real energy of a signal of a corresponding detection point. Due to impact of a windowing operation in an echo signal processing process, once the stroke of the direct path, the strokes $\Delta r_1$ and $\Delta r_2$ of the reflection paths, and the Doppler velocity differences $\Delta v_1$ and $\Delta v_2$ are respectively close to a distance resolution and a speed resolution of a radar, on a two-dimensional spectrum, energy corresponding to the reflection path may be extended to a resolution unit in which the energy peak corresponding to the direct path is located (for example, a case in which a distance value is 0 in FIG. 4, to be specific, the energy corresponding to the reflection path are close enough to energy corresponding to the direct path). As a result, an angular spatial spectrum of the resolution unit is not desirable, and an angle estimation deviation is caused, and consequently, determined orientation information of the target object is inaccurate, and a false alarm object is formed or a track tracking deviation of the target object is caused.

Therefore, if no processing is performed on the echo signal, the foregoing determined orientation information of the target object may be inaccurate.

Based on the foregoing problem, an embodiment of this application provides a data processing method for a radar sensor, applied to a data processing device. The data processing device processes an echo signal obtained by transmitting a signal to a target object by a radar sensor disposed on a vehicle, to obtain orientation information of the target object. In this way, the obtained orientation information is more accurate, so that the vehicle can sense an ambient environment more accurately, and adjust a location and/or route planning of the vehicle in a timely manner, and traveling safety is improved.

The following describes the technical solutions in embodiments of this application with reference to the accompanying drawings in embodiments of this application.

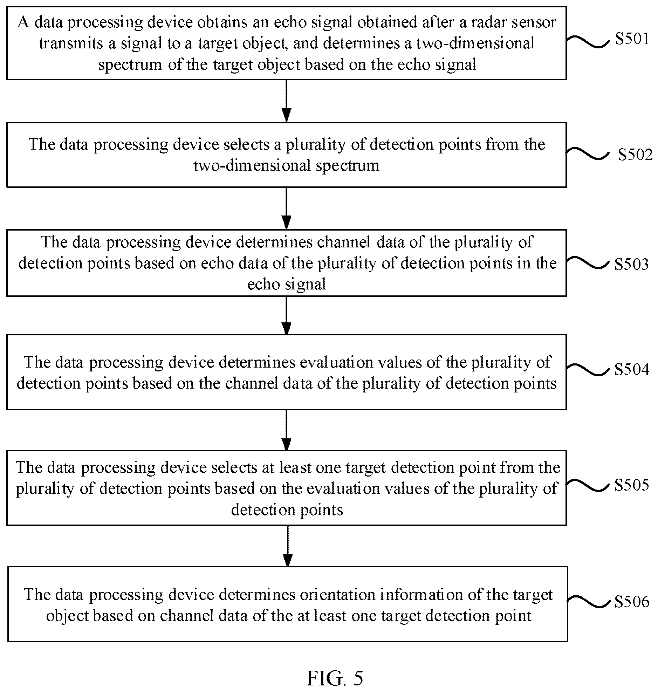

The following describes a process of a data processing method for a radar sensor provided in an embodiment of this application. With reference to the flowchart shown in FIG. 5, the following describes a process of implementing data processing of the radar sensor by a data processing device.

S501: The data processing device obtains an echo signal obtained after the radar sensor transmits a signal to a target object, and determines a two-dimensional spectrum of the target object based on the echo signal.

A waveform generation module of the radar sensor generates a to-be-transmitted signal, a transmitting module transmits the to-be-transmitted signal to the target object, and a receiving module receives the echo signal reflected by the target object. The data processing device obtains the echo signal, performs frequency mixing on the echo signal and a synchronization reference signal of the transmitted signal to obtain a baseband signal, samples the baseband signal, converts a sampled time-domain signal into a frequency-domain signal, and performs Fourier transform and non-coherent integration calculation on the frequency-domain signal to obtain the two-dimensional spectrum of the target object.

In some implementations, the two-dimensional spectrum may be a two-dimensional distance-speed spectrum. The two-dimensional distance-speed spectrum may be presented in a manner of a two-dimensional spectrum graph. In the two-dimensional spectrum graph, two horizontal axes (coordinate axes of independent variables) are respectively distance and speed, and a vertical axis (coordinate axis of a dependent variable) is energy. It may be understood that the two-dimensional spectrum may indicate relationships between both a first distance and a first relative speed and an energy value of the echo signal. The first distance is a relative distance between the radar sensor and the target object, and the first relative speed is a relative speed between the radar sensor and the target object.

S502: The data processing device selects a plurality of detection points from the two-dimensional spectrum.

In an actual application process, the two-dimensional spectrum graph is a three-dimensional coordinate graph, where three dimensions are respectively a distance dimension, a speed dimension, and an energy dimension. In this embodiment of this application, to describe a concept of the detection point, the energy dimension is compressed. In other words, the energy dimension is not considered temporarily, and the two-dimensional spectrum is processed into a plane distance-speed coordinate graph in which the energy dimension is ignored. If information in the energy dimension needs to be used, the information may be extracted from the two-dimensional spectrum graph.

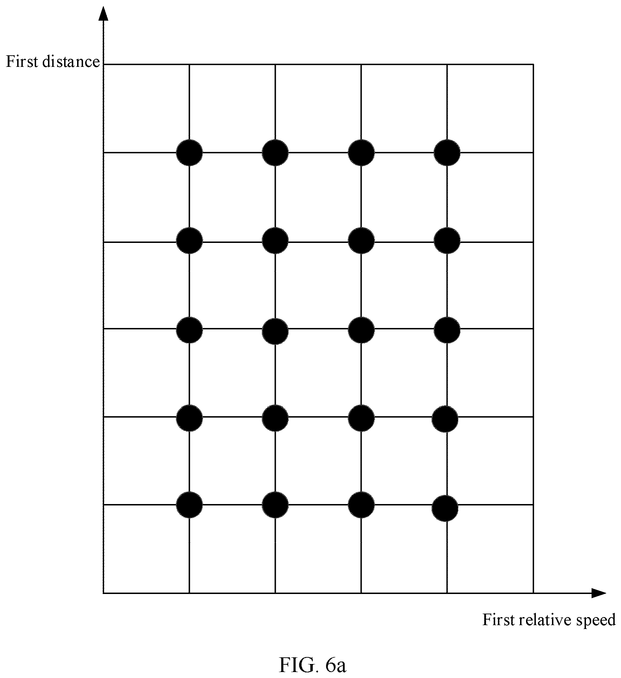

FIG. 6a is a diagram of distribution of detection points according to an embodiment of this application. Black solid dots represent detection points. Each detection point may be described by using corresponding feature information, and the feature information may indicate a first distance and a first relative speed that correspond to the detection point in the two-dimensional spectrum. Refer to FIG. 6a. Both a minimum distance unit in the distance dimension and a minimum speed unit in the speed dimension may be set.

The data processing device selects the plurality of detection points from the two-dimensional spectrum. A quantity of selected detection points may be all detection points included in the plane distance-speed coordinate graph into which the two-dimensional spectrum is processed, or may be some of the detection points. For example, a manner of selecting some of the detection points may be selecting detection points whose speeds are within a specified speed range and whose distances are within a specified distance range.

In an implementation, constant false alarm detection may be further performed, so that an energy value of each of the plurality of detection points selected by the data processing device from the two-dimensional spectrum is greater than a specified energy threshold. A detection point with a low energy value may be generated due to noise interference, or may be generated due to a reflection path case. Therefore, in such a design, a detection point whose energy value is less than the specified energy threshold may be first filtered out. In this way, a data processing amount can be reduced, and data processing accuracy can also be improved.

S503: The data processing device determines channel data of the plurality of detection points based on echo data of the plurality of detection points in the echo signal.

The data processing device performs time-frequency conversion on the echo data of the plurality of detection points, to obtain the channel data of the plurality of detection points. For example, the channel data includes information such as an amplitude and a phase of the echo signal.

S504: The data processing device determines evaluation values of the plurality of detection points based on the channel data of the plurality of detection points.

In a scenario in which there is a tunnel or a guardrail, in a process in which the radar sensor transmits the signal to the target object, a case in which a propagation path is a reflection path may occur. The case in which the propagation path is a reflection path causes interference to a case in which the reflection path is a direct path. Consequently, accuracy of the determined orientation information of the target object is affected. In addition, existence of a noise signal may affect the accuracy of the determined orientation information of the target object. However, an evaluation value of any detection point may reflect accuracy of the orientation information that is of the target object and that is determined based on channel data of the detection point. Therefore, the data processing device may perform filtering on the plurality of detection points based on the evaluation values, and filter out a detection point including the noise signal and a detection point formed in the case in which the propagation path is a reflection path. Therefore, the accuracy of the determined orientation information of the target object is improved.

A second detection point is used as an example to describe a process of determining an evaluation value of each detection point. The second detection point is any one of the plurality of detection points, and manners of determining the evaluation value of each point include but are not limited to the following four manners. In this embodiment of this application, any one of the manners may be selected to calculate the evaluation value of each detection point.

First calculation manner: The first calculation manner is a manner in which a spatial spectrum is used. This manner may be implemented through steps A1 and A2.

A1: The data processing device determines a spatial spectrum of the second detection point based on channel data of the second detection point.

The data processing device performs angle estimation based on the channel data of the second detection point, to obtain the spatial spectrum of the second detection point. The spatial spectrum indicates, from a perspective of an angle, energy distribution, in space, of a signal at the second detection point. The angle may include a deflection angle, a pitch angle, and a roll angle of the second detection point relative to the radar sensor. The deflection angle means an angle of the second detection point relative to a normal direction of the radar sensor. For concepts of the pitch angle and the roll angle, refer to descriptions in a related technology. Details are not described herein again.

A2: The data processing device uses a main lobe width or a side lobe depth of the spatial spectrum as an evaluation value of the second detection point.

The spatial spectrum has a spatial dimension on a horizontal axis. In other words, the horizontal axis indicates an angle value. The spatial spectrum has an energy dimension on a vertical axis. In other words, the vertical axis indicates an energy value.

In an implementation, the data processing device may use the main lobe width as the evaluation value of the second detection point. The main lobe width means a value in the spatial dimension, namely, an angle value of a main lobe.

In another implementation, the data processing device may use the side lobe depth as the evaluation value of the second detection point. When there are a plurality of side lobes, the data processing device uses a depth of a first side lobe as the evaluation value of the second detection point. The first side lobe herein may be a side lobe with a largest depth among all side lobes. The depth means a value in the energy dimension of the spatial spectrum, namely, an energy value of the first side lobe, and may be expressed in decibels.

Second calculation manner: The second calculation manner is a manner in which a channel data ratio is used. This manner may be implemented through steps B1 to B3.

B1: The data processing device extracts, from a spatial spectrum of the second detection point, an angle value of an angle of the second detection point relative to a normal direction of the radar sensor.

Refer to the descriptions in step A1. The data processing device may extract, from the spatial spectrum of the second detection point, the angle value $\theta_1$ of the angle of the second detection point relative to the normal direction of the radar sensor.

B2: The data processing device determines a channel data component of the second detection point based on the angle value.

For example, the data processing device may determine the channel data component of the second detection point according to the following formula:

$$a^H(\theta_1)xa(\theta_1)$$

$a^H(\theta_1)xa(\theta_1)$ is the channel data component of the second detection point, $x$ is channel data of the second detection point, a(*) is a steering vector, H is a Hermitian transpose, and $\theta_1$ is an angle value that is of the angle of the second detection point relative to the normal direction of the radar sensor and that is present when a propagation path between the radar sensor and the target object is a direct path.

B3: The data processing device determines an evaluation value of the second detection point based on the channel data of the second detection point and the channel data component of the second detection point.

For example, the data processing device may calculate the evaluation value of the second detection point according to the following formula:

$$\tilde{x} = x - a^H(\theta_1)xa(\theta_1)$$

$$I_{peak} = \frac{\|\tilde{x}\|^2}{\|x\|^2}$$

$I_{peak}$ represents the evaluation value of the second detection point, $\tilde{x}$ is a remaining channel data component of the second detection point, x is the channel data of the second detection point, and $\|.\|^2$ represents a Euclidean norm.

Third calculation manner: The third calculation manner is a manner in which an angle difference is used. This manner may be implemented through steps C1 and C2.

C1: The data processing device determines an angle of departure and an angle of arrival of a signal at the second detection point based on channel data of the second detection point.

The angle of departure means an included angle between a transmitted signal (or an electromagnetic wave) from a transmit antenna to the target object and a normal direction of the radar sensor. The angle of arrival means an included angle between a reflected signal and the normal direction of the radar sensor. If a propagation path of the transmitted signal is a direct path, the angle of departure is the same as the angle of arrival. However, when the propagation path of the transmitted signal is a reflection path, the reflected signal is propagated in an environment, and may be reflected by an object in the environment. Therefore, the angle of departure may be different from the angle of arrival.

The channel data of the second detection point includes information such as a signal amplitude, a phase, the angle of departure, and the angle of arrival of the signal at the second detection point. Therefore, the data processing device may determine the angle of departure and the angle of arrival of the signal at the second detection point based on the channel data of the second detection point.

C2: The data processing device determines an absolute value of a difference between the angle of departure and the angle of arrival as an evaluation value of the second detection point.

An angle of departure closer to an angle of arrival indicates that a signal at a corresponding detection point is generated when the propagation path is a direct path. Therefore, the data processing device may use the absolute value $|\theta_{doa} - \theta_{dod}|$ of the difference between the angle of departure $\theta_{dod}$ and the angle of arrival $\theta_{dod}$ as the evaluation value of the second detection point.

Fourth calculation manner: The fourth calculation manner is a manner in which an energy standard deviation is used. This manner may be implemented through steps D1 and D2.

D1: The data processing device determines an energy standard deviation of the second detection point based on channel data of the second detection point and channel data of a detection point associated with the second detection point.

The detection point associated with the second detection point is a detection point within a first specified range around the second detection point. For example, detection points associated with the second detection point are eight nearest detection points (three on the top, one on the left, one on the right, and three on the bottom) around the second detection point. An energy value of each detection point may be obtained through calculation by using channel data of the detection point. Therefore, the data processing device may calculate an energy value of the second detection point based on the channel data of the second detection point, calculate an energy value of the detection point associated with the second detection point based on the channel data of the detection point associated with the second detection point, and then perform standard deviation calculation based on the energy value of the second detection point and the energy value of the detection point associated with the second detection point, to obtain the energy standard deviation of the second detection point.

D2: The data processing device determines the energy standard deviation as an evaluation value of the second detection point.

Because the energy standard deviation of the second detection point may be used to reflect an energy fluctuation degree of the channel data of the second detection point between channels, the data processing device determines the energy standard deviation as the evaluation value of the second detection point.

S505: The data processing device selects at least one target detection point from the plurality of detection points based on the evaluation values of the plurality of detection points.

Because an evaluation value of any detection point may be used to reflect accuracy of the orientation information that is of the target object and that is determined based on the channel data of the detection point, the data processing device performs filtering on the plurality of detection points based on the evaluation values of the plurality of detection points, to obtain the at least one target detection point. Filtering manners include but are not limited to the following two manners.

First filtering manner: A clustering manner is used. This manner may be implemented through steps E1 to E3.

E1: The data processing device clusters the plurality of detection points based on feature information of the plurality of detection points, to obtain a plurality of detection point sets.

Feature information of any detection point indicates a first distance and a first relative speed that correspond to the detection point in the two-dimensional spectrum, each detection point set includes a plurality of detection points, and feature information of the plurality of detection points included in each detection point set is the same or similar. It may also be understood that each detection point set includes the plurality of detection points whose first distances are close to each other and whose first relative speeds are close to each other. Specifically, features of a plurality of detection points included in a first detection point set is used for description. The first detection point set is any one of the plurality of detection point sets.

The first detection point set meets the following conditions: a difference between a maximum distance and a minimum distance is less than a distance threshold, and a difference between a maximum speed and a minimum speed is less than a speed threshold.

The first detection point set includes a plurality of first detection points, the maximum distance is a first distance with a maximum value in feature information of the plurality of first detection points, the minimum distance is a first distance with a minimum value in the feature information of the plurality of first detection points, the maximum speed is a first relative speed with a maximum value in the feature information of the plurality of first detection points, and the minimum speed is a first relative speed with a minimum value in the feature information of the plurality of first detection points.

The plurality of detection points are clustered in the foregoing manner, so that the first distances in the feature information of the plurality of detection points included in each obtained detection point set are close enough, and the first relative speeds are close enough. This indicates that locations of the plurality of detection points in the set are close enough to corresponding locations on the target object. This reduces a probability of occurrence of an edge detection point or noise on the target object.

E2: When there is a detection point whose evaluation value is less than a first evaluation value threshold in the first detection point set, the data processing device uses the detection point whose evaluation value is less than the first evaluation value threshold as the target detection point.

It may be learned from the foregoing evaluation value calculation manner that a smaller evaluation value indicates more accurate orientation information of the target object determined based on the detection point. Therefore, when there is the detection point whose evaluation value is less than the first evaluation value threshold in the first detection point set, the data processing device may obtain, through filtering, the detection point whose evaluation value is less than the first evaluation value threshold as the target detection point, and discard a detection point whose evaluation value is greater than or equal to the first evaluation value threshold.

E3: When there is no detection point whose evaluation value is less than a first evaluation value threshold in the first detection point set, the data processing device uses a detection point with a smallest evaluation value as the target detection point.

If the evaluation values of the plurality of first detection points included in the first detection point set are all greater than or equal to the first evaluation value threshold, the data processing device may use a detection point with the smallest evaluation value as the target detection point, to improve accuracy of the orientation information that is of the target object and that is determined based on the target detection point to some extent.

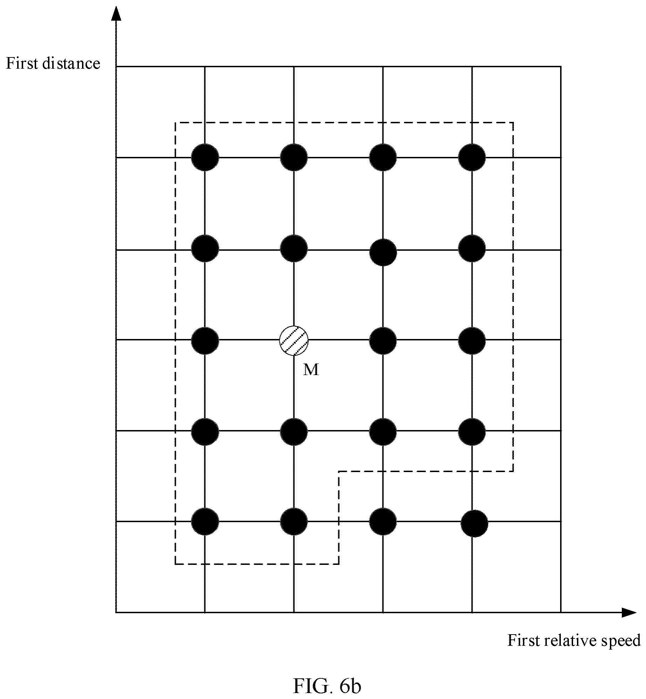

As shown in FIG. 6b, detection points included in a dashed box form the first detection point set, and a detection point M is the target detection point.

Second filtering manner: A manner of comparing peak values of energy is used. This manner may be implemented through steps F1 to F4.

F1: The data processing device determines at least one energy threshold based on energy values of the plurality of detection points.

The data processing device obtains, through filtering performed on the plurality of detection points based on the energy values of the plurality of detection points, at least one detection point whose energy value is a peak value. For ease of description, a data processing module determines the detection point whose energy value is a peak value as an energy peak value point, and determines an energy value of the energy peak value point as the energy threshold. In an implementation, the energy value of the energy peak value point is greater than energy of two adjacent detection points in the distance dimension, and/or the energy value of the energy peak value point is greater than energy of two adjacent detection points in the speed dimension. The "two" is merely used for illustration, and does not constitute a specific limitation.

F2: The data processing device determines, in the plurality of detection points, at least one detection point associated with each energy threshold.

The first energy peak value point is any one of a plurality of energy peak value points, and an energy value of the first energy peak value point is a first energy threshold. At least one detection point associated with the first energy threshold is at least one detection point associated with the first energy peak value point. The "associated" herein may be a detection point whose energy value is less than the first energy threshold in detection points within a second specified range around the first energy peak value point.

F3: When there is a detection point whose evaluation value is less than a second evaluation value threshold in the at least one detection point associated with the first energy threshold, the data processing device uses the detection point whose evaluation value is less than the second evaluation value threshold as the target detection point.

For a manner of calculating an evaluation value of each detection point, refer to any one of A1 and A2, B1 to B3, C1 and C2, and D1 and D2. Details are not described herein again. When performing filtering on the at least one detection point associated with the first energy threshold, the data processing module performs filtering on the at least one detection point by using the second evaluation value threshold. The second evaluation value threshold is an evaluation value corresponding to the first energy threshold, namely, an evaluation value of the first energy peak value point. Therefore, when there is the detection point whose evaluation value is less than the second evaluation value threshold in the at least one detection point associated with the first energy threshold, the data processing device may use the detection point whose evaluation value is less than the second evaluation value threshold as the target detection point.

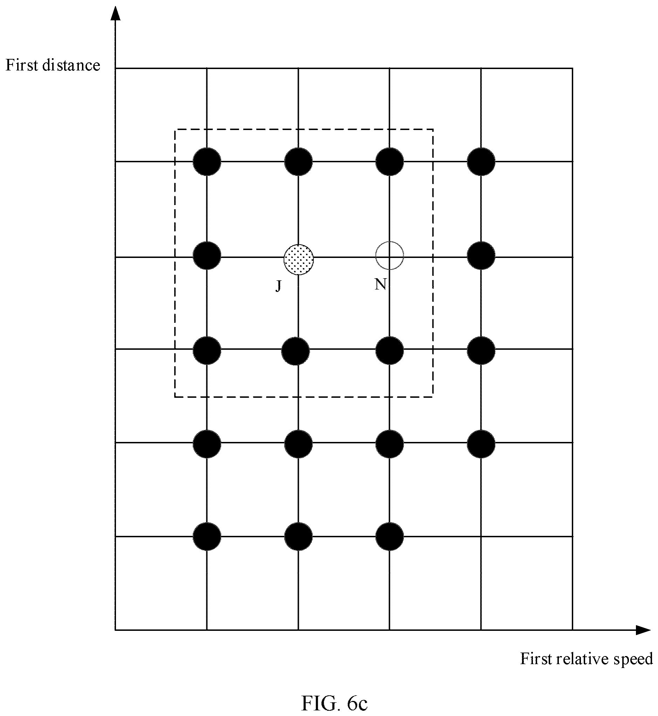

As shown in FIG. 6c, a detection point J is the first energy peak value point, detection points included in a dashed box are detection points associated with the first energy threshold, and a detection point N is the target detection point.

F4: When there is no detection point whose evaluation value is less than a second evaluation value threshold in the at least one detection point associated with the first energy threshold, the data processing device uses a detection point with a smallest evaluation value as the target detection point.

If the evaluation value of the at least one detection point associated with the first energy threshold is greater than or equal to the second evaluation value threshold, the data processing device may use the detection point with the smallest evaluation value as the target detection point.

For any detection point, a smaller evaluation value indicates a higher probability that the detection point is a non-noise signal point generated when a propagation path is a direct path. In other words, spatial spectrum quality of the detection point is better, and orientation information that is of the target object and that is determined based on channel data of the detection point is more accurate.

In some embodiments, after each target detection point is obtained, a specified label, for example, nonPeakFlag, spectralQualityIndicator, spectrumCongidence, multiPathProbability, or a combination of some words, may be added to each target detection point. In such a design, the data processing module can quickly locate a corresponding target detection point by using the specified label.

S506: The data processing device determines the orientation information of the target object based on channel data of the at least one target detection point.

After obtaining the at least one target detection point from the plurality of detection points through filtering, the data processing device may determine the orientation information of the target object based on the channel data of the at least one target detection point obtained through filtering. The orientation information may include a location of the target object relative to the radar sensor, a deflection angle, a pitch angle, and a roll angle of the target object relative to the radar sensor, and the like. For a specific implementation of determining the orientation information based on the channel data, refer to a manner in a related technology. Details are not described herein again.

In the foregoing embodiment, a target detection point with better space quality is found by performing filtering on detection points. The orientation information that is of the target object and that is determined based on the channel data of the target detection point is more accurate, track management of the target object is optimized, and a false alarm case is suppressed. In addition, the target information may indicate a vehicle on which the radar sensor is disposed to adjust a location and/or route planning of the vehicle, so that traveling safety is improved.

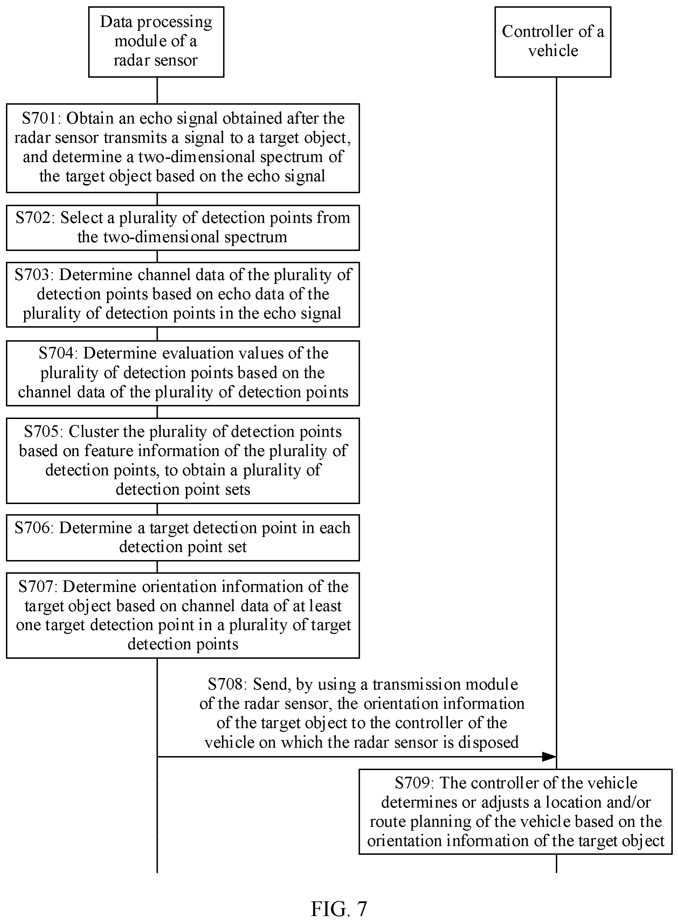

FIG. 7 is a diagram of a complete procedure of a data processing method for a radar sensor according to an embodiment of this application. In this embodiment, a data processing module in the radar sensor is used as an example to describe the data processing method. In this example, a target detection point is selected in a clustering manner. As shown in FIG. 7, the method includes the following steps.

S701: The data processing module obtains an echo signal obtained after the radar sensor transmits a signal to a target object, and determines a two-dimensional spectrum of the target object based on the echo signal.

For an implementation of this step, refer to step S501. Details are not described herein again.

S702: The data processing module selects a plurality of detection points from the two-dimensional spectrum.

For an implementation of this step, refer to step S502. Details are not described herein again.

S703: The data processing module determines channel data of the plurality of detection points based on echo data of the plurality of detection points in the echo signal.

For an implementation of this step, refer to step S503. Details are not described herein again.

S704: The data processing module determines evaluation values of the plurality of detection points based on the channel data of the plurality of detection points.

For an implementation of this step, refer to step S504. Details are not described herein again.

S705: The data processing module clusters the plurality of detection points based on feature information of the plurality of detection points, to obtain a plurality of detection point sets.

For implementation of this step, refer to step E1. Details are not described herein again.

S706: The data processing module performs the following operation for each of the plurality of detection point sets, to determine a target detection point in each detection point set: when there is a detection point whose evaluation value is less than a first evaluation value threshold in a first detection point set, the data processing module uses the detection point whose evaluation value is less than the first evaluation value threshold as the target detection point; or when there is no detection point set whose evaluation value is less than a first evaluation value threshold in a first detection point set, the data processing module uses a detection point with a smallest evaluation value as the target detection point.

For implementation of this step, refer to step E2. Details are not described herein again.

S707: The data processing module determines orientation information of the target object based on channel data of at least one target detection point in a plurality of target detection points.

For implementation of this step, refer to step S506. Details are not described herein again.

S708: A data transmission module of the radar sensor sends the orientation information of the target object to a controller of a vehicle on which the radar sensor is disposed.

The radar sensor sends, by using the data transmission module, the orientation information of the target object to the controller of the vehicle on which the radar sensor is disposed.

S709: The controller of the vehicle determines or adjusts a location and/or route planning of the vehicle based on the orientation information of the target object.

The controller of the vehicle may determine the location of the vehicle based on the orientation information of the target object. If a distance between the location of the vehicle and a location of the target object is less than a specific distance, collision between the vehicle and the target object may be prevented by adjusting the route planning, so that traveling safety is improved.

In this embodiment of this application, after determining the evaluation values of the plurality of detection points, the data processing module clusters the plurality of detection points, to obtain the plurality of detection point sets. Features of a plurality of detection points in each detection point set are the same or similar. In other words, distances between radar sensors indicated by the plurality of detection points and the target object are close enough, and relative speeds of the radar sensors and the target object are close enough. Therefore, the target detection point is obtained, through filtering, from each detection point set in a manner of an evaluation value, so that accuracy of the determined target detection point can be improved, and accuracy of the determined orientation information of the target object can be improved.

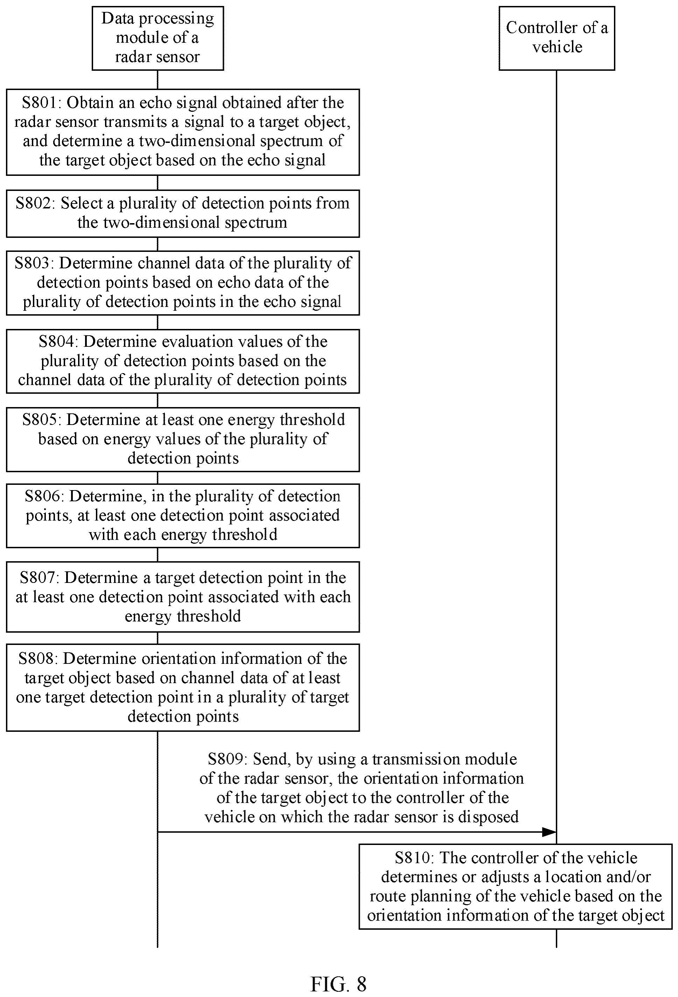

FIG. 8 is a diagram of a complete procedure of a data processing method for a radar sensor according to an embodiment of this application. In this embodiment, an example in which a data processing device is a data processing module in the radar sensor is used to describe the data processing method. In this example, a target detection point is selected in a manner of obtaining an energy peak value point through filtering. As shown in FIG. 8, the method includes the following steps.

S801: The data processing module obtains an echo signal obtained after the radar sensor transmits a signal to a target object, and determines a two-dimensional spectrum of the target object based on the echo signal.

For an implementation of this step, refer to step S501. Details are not described herein again.

S802: The data processing module selects a plurality of detection points from the two-dimensional spectrum.

For an implementation of this step, refer to step S502. Details are not described herein again.

S803: The data processing module determines channel data of the plurality of detection points based on echo data of the plurality of detection points in the echo signal.

For an implementation of this step, refer to step S503. Details are not described herein again.

S804: The data processing module determines evaluation values of the plurality of detection points based on the channel data of the plurality of detection points.

For an implementation of this step, refer to step S504. Details are not described herein again.

S805: The data processing module determines at least one energy threshold based on energy values of the plurality of detection points.

For an implementation of this step, refer to step F1. Details are not described herein again.

S806: The data processing module determines, in the plurality of detection points, at least one detection point associated with each energy threshold.

For an implementation of this step, refer to step F2. Details are not described herein again.

S807: The data processing module performs the following operation for the at least one detection point associated with each energy threshold in a plurality of energy threshold, to determine a target detection point in the at least one detection point associated with each energy threshold: when there is a detection point whose evaluation value is less than a second evaluation value threshold in at least one detection point associated with a first energy threshold, using the detection point whose evaluation value is less than the second evaluation value threshold as the target detection point; or when there is no detection point whose evaluation value is less than a second evaluation value threshold in at least one detection point associated with a first energy threshold, using a detection point with a smallest evaluation value as the target detection point.

For an implementation of this step, refer to step F3. Details are not described herein again.

S808: The data processing module determines orientation information of the target object based on channel data of at least one target detection point in a plurality of target detection points.

For an implementation of this step, refer to step S506. Details are not described herein again.

S809: The radar sensor sends, by using a data transmission module, the orientation information of the target object to a controller of a vehicle on which the radar sensor is disposed.

For an implementation of this step, refer to step S708. Details are not described herein again.

S810: The controller of the vehicle determines or adjusts a location and/or route planning of the vehicle based on the orientation information of the target object.

For an implementation of this step, refer to step S709. Details are not described herein again.

In this embodiment of this application, after determining the evaluation values of the plurality of detection points, the data processing module may determine, in the plurality of detection points based on the energy values of the plurality of detection points, an energy peak value point whose energy value is a peak value, and determine, in at least one detection point associated with the energy peak value point based on the evaluation value, a target detection point in the at least one detection point associated with the energy peak value point. Therefore, in the at least one detection point associated with each energy peak value point, the target detection point is obtained, through filtering, in a manner of an evaluation value, so that accuracy of the determined target detection point can be improved, and accuracy of the determined orientation information of the target object can be improved.

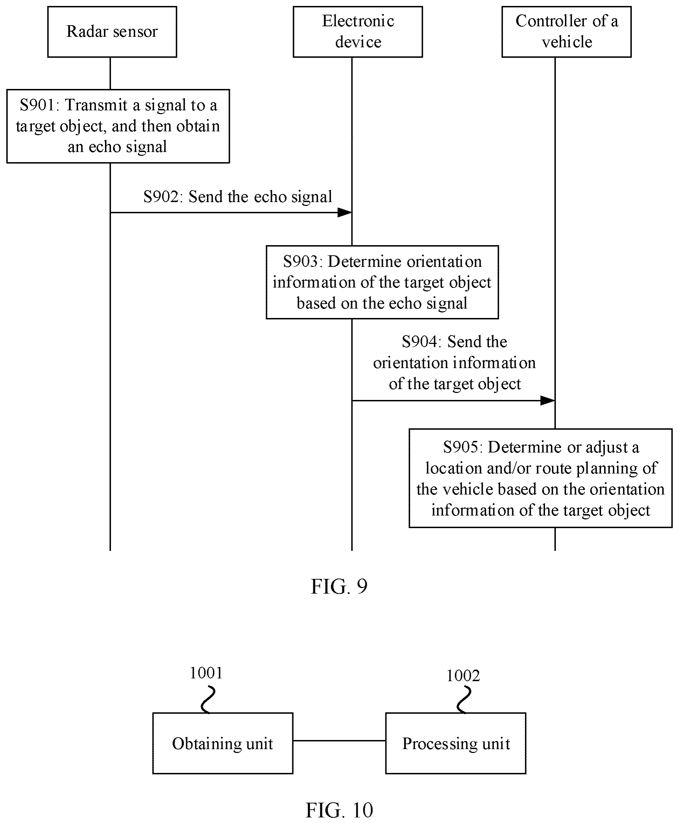

FIG. 9 is a diagram of a complete procedure of a data processing method for a radar sensor according to an embodiment of this application. In this embodiment, an example in which a data processing device is an electronic device that is independent of the radar sensor and that has a data processing function and a data transmission function is used to describe the data processing method. As shown in FIG. 9, the method includes the following steps.

S901: The radar sensor transmits a signal to a target object, and then obtains an echo signal.

For an implementation of this step, refer to step S501. Details are not described herein again.

S902: The radar sensor sends the echo signal to the electronic device.

For an implementation of this step, refer to step S501. Details are not described herein again.

S903: The electronic device determines orientation information of the target object based on the echo signal.

For a process in which the electronic device determines the orientation information of the target object, refer to steps S701 to S707 in the embodiment shown in FIG. 7 or steps S801 to S807 in the embodiment shown in FIG. 8. Details are not described herein again.

S904: The electronic device sends the orientation information of the target object to a controller of a vehicle on which the radar sensor is disposed.

For an implementation of this step, refer to step S708. Details are not described herein again.

S905: The controller of the vehicle determines or adjusts a location and/or route planning of the vehicle based on the orientation information of the target object.

For an implementation of this step, refer to step S709. Details are not described herein again.

In this embodiment of this application, the electronic device obtains the echo signal from the radar sensor, determines the orientation information of the target object based on the echo signal, and sends the orientation information of the target object to the controller of the vehicle. A data processing process is transferred to the electronic device for execution, so that a data processing amount of the radar sensor is reduced, and accuracy of the orientation information that is of the target object and that is determined by the electronic device is improved.

Based on the foregoing content and concept, FIG. 10 is a diagram of a structure of a data processing apparatus for a radar sensor according to an embodiment of this application. The data processing apparatus is configured to perform the data processing method in the foregoing method embodiments. For related features, refer to the foregoing method embodiments. Details are not described herein again. The data processing apparatus may be used in a data processing module in the radar sensor, or may be used in an electronic device that is independent of the radar sensor and that has a data processing function and a data transmission function. The data processing apparatus includes an obtaining unit 1001 and a processing unit 1002.

The obtaining unit 1001 is configured to: obtain an echo signal obtained after the radar sensor transmits a signal to a target object, and determine a two-dimensional spectrum of the target object based on the echo signal. The two-dimensional spectrum indicates relationships between both a first distance and a first relative speed and an energy value of the echo signal, the first distance is a relative distance between the radar sensor and the target object, and the first relative speed is a relative speed between the radar sensor and the target object.

The processing unit 1002 is configured to: select a plurality of detection points from the two-dimensional spectrum; determine channel data of the plurality of detection points based on echo data of the plurality of detection points in the echo signal; determine evaluation values of the plurality of detection points based on the channel data of the plurality of detection points, where an evaluation value of any detection point is used to reflect accuracy of orientation information that is of the target object and that is determined based on channel data of the detection point; select at least one target detection point from the plurality of detection points based on the evaluation values of the plurality of detection points; and determine the orientation information of the target object based on channel data of the at least one target detection point.

In an optional implementation, when selecting the at least one target detection point from the plurality of detection points based on the evaluation values of the plurality of detection points, the processing unit 1002 is specifically configured to:

cluster the plurality of detection points based on feature information of the plurality of detection points, to obtain a plurality of detection point sets, where feature information of any detection point indicates a first distance and a first relative speed that correspond to the detection point in the two-dimensional spectrum, and each detection point set includes a plurality of detection points; and

when there is a detection point whose evaluation value is less than a first evaluation value threshold in a first detection point set, use the detection point whose evaluation value is less than the first evaluation value threshold as the target detection point, where the first detection point set is any one of the plurality of detection point sets; or

when there is no detection point whose evaluation value is less than a first evaluation value threshold in a first detection point set, use a detection point with a smallest evaluation value as the target detection point.

In an optional implementation, the first detection point set meets the following conditions: a difference between a maximum distance and a minimum distance is less than a distance threshold, and a difference between a maximum speed and a minimum speed is less than a speed threshold.

The first detection point set includes a plurality of first detection points, the maximum distance is a first distance with a maximum value in feature information of the plurality of first detection points, the minimum distance is a first distance with a minimum value in the feature information of the plurality of first detection points, the maximum speed is a first relative speed with a maximum value in the feature information of the plurality of first detection points, and the minimum speed is a first relative speed with a minimum value in the feature information of the plurality of first detection points.

In an optional implementation, when selecting the at least one target detection point from the plurality of detection points based on the evaluation values of the plurality of detection points, the processing unit 1002 is specifically configured to:

determine at least one energy threshold based on energy values of the plurality of detection points; determine, in the plurality of detection points, at least one detection point associated with each energy threshold, where an energy value of at least one detection point associated with a first energy threshold is less than the first energy threshold, and the first energy threshold is any one of the at least one energy threshold; and

when there is a detection point whose evaluation value is less than a second evaluation value threshold in the at least one detection point associated with the first energy threshold, use the detection point whose evaluation value is less than the second evaluation value threshold as the target detection point, where the second evaluation value threshold is an evaluation value corresponding to the first energy threshold; or

when there is no detection point whose evaluation value is less than a second evaluation value threshold in the at least one detection point associated with the first energy threshold, use a detection point with a smallest evaluation value as the target detection point.

In an optional implementation, when determining the evaluation values of the plurality of detection points based on the channel data of the plurality of detection points, the processing unit 1002 is specifically configured to:

determine a spatial spectrum of a second detection point based on channel data of the second detection point, and use a main lobe width or a side lobe depth of the spatial spectrum as an evaluation value of the second detection point, where the spatial spectrum indicates energy distribution of a signal at the second detection point;

extract, from a spatial spectrum of a second detection point, an angle value of an angle of the second detection point relative to a normal direction of the radar sensor, determine a channel data component of the second detection point based on the angle value, and determine an evaluation value of the second detection point based on channel data of the second detection point and the channel data component of the second detection point, where the channel data component is channel data present when a propagation path between the radar sensor and the target object is a direct path, and the angle is an angle at which the propagation path between the radar sensor and the target object is a direct path;

determine an angle of departure and an angle of arrival of a signal at a second detection point based on channel data of the second detection point, and determine an absolute value of a difference between the angle of departure and the angle of arrival as an evaluation value of the second detection point; or determine an energy standard deviation of a second detection point based on channel data of the second detection point and channel data of a detection point associated with the second detection point, and determine the energy standard deviation as an evaluation value of the second detection point, where the energy standard deviation indicates an energy fluctuation status of a signal at the second detection point, and the detection point associated with the second detection point is a detection point in a first specified range around the second detection point, where

the second detection point is any one of the plurality of detection points.

In an optional implementation, before determining the evaluation values of the plurality of detection points based on the channel data of the plurality of detection points, the processing unit 1002 is specifically configured to:

determine that an energy value of each of the plurality of detection points is greater than a specified energy threshold.

It should be noted that, in embodiments of this application, module division is an example, and is merely a logical function division. During actual implementation, another division manner may be used. Functional modules in embodiments of this application may be integrated into one processing module, or each of the modules may exist alone physically, or two or more modules are integrated into one module. The integrated module may be implemented in a form of hardware, or may be implemented in a form of software functional module.

All or some of the foregoing methods may be implemented by using software, hardware, firmware, or any combination thereof. When software is used to implement the methods, all or some of the foregoing methods may be implemented in a form of computer program product. The computer program product includes one or more computer instructions. When the computer program instructions are loaded and executed on a computer, all or some of procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive (solid-state drive, SSD).

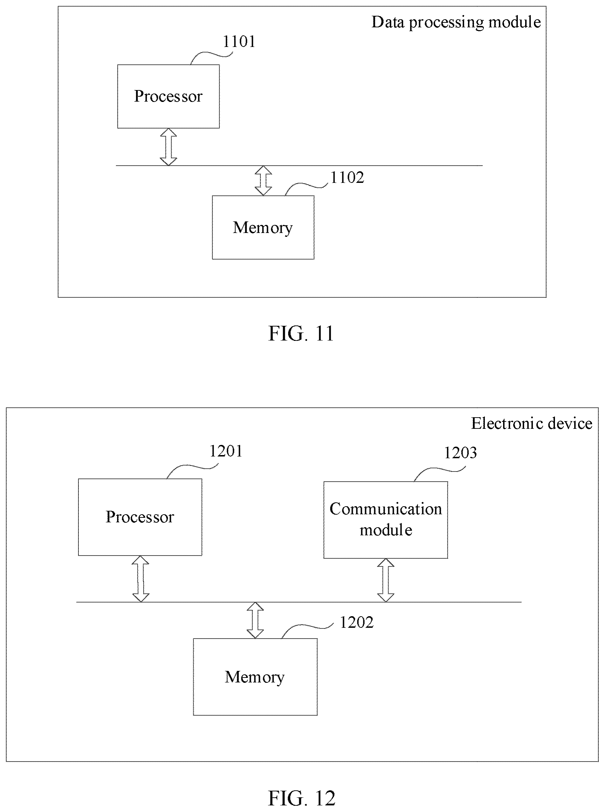

In a simple embodiment, a person skilled in the art may figure out that a data processing module integrated in a radar sensor in embodiments may be in a form shown in FIG. 11.

The data processing module shown in FIG. 11 includes at least one processor 1101 and a memory 1102.

The memory 1102 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 1102 is any other medium that can be used to carry or store expected program code having an instruction form or a data structure form and that can be accessed by a computer, but is not limited thereto. The memory 1102 may be a combination of the foregoing memories.

In this embodiment of this application, a specific connection medium between the processor 1101 and the memory 1102 is not limited.

The processor 1101 may be a CPU, or the processor 1101 may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, an artificial intelligence chip, a system on chip, or the like. The general-purpose processor may be a microprocessor or any conventional processor or the like. The data processing device may not include a communication module. When another device performs communication, the communication may be implemented by using a data transmission module inside the radar sensor.

In a possible application scenario, the data processing device uses the form shown in FIG. 11. The processor 1101 in FIG. 11 may invoke computer executable instructions stored in the memory 1102, so that an electronic device can perform the data processing method in any one of the foregoing method embodiments.

In a simple embodiment, a person skilled in the art may alternatively figure out that an electronic device independent of a radar sensor in embodiments may be in a form shown in FIG. 12.

FIG. 12 is a diagram of a structure of an electronic device according to an embodiment. The electronic device shown in FIG. 12 includes at least one processor 1201, a memory 1202, and a communication module 1203. For functions of the processor 1201, the memory 1202, and the communication module 1203, refer to functions of corresponding components in FIG. 11. Details are not described herein again.

A person skilled in the art should understand that embodiments of this application may be provided as a method, a system, or a computer program product. Therefore, this application may use a form of hardware-only embodiment, a software-only embodiment, or an embodiment with combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A data processing method for a radar sensor, comprising:

   obtaining an echo signal obtained after the radar sensor transmits a signal to a target object, and determining a two-dimensional spectrum of the target object based on the echo signal, wherein the two-dimensional spectrum indicates relationships between both a first distance and a first relative speed and an energy value of the echo signal, the first distance is a relative distance between the radar sensor and the target object, and the first relative speed is a relative speed between the radar sensor and the target object;
   selecting a plurality of detection points from the two-dimensional spectrum;
   determining channel data of the plurality of detection points based on echo data of the plurality of detection points in the echo signal;
   determining evaluation values of the plurality of detection points based on the channel data of the plurality of detection points, wherein an evaluation value of any detection point is used to reflect accuracy of orientation information that is of the target object and that is determined based on channel data of the detection point;
   selecting at least one target detection point from the plurality of detection points based on the evaluation values of the plurality of detection points; and
   determining the orientation information of the target object based on channel data of the at least one target detection point.

2. The method according to claim 1, wherein the selecting at least one target detection point from the plurality of detection points based on the evaluation values of the plurality of detection points comprises:

   clustering the plurality of detection points based on feature information of the plurality of detection points, to obtain a plurality of detection point sets, wherein feature information of any detection point indicates a first distance and a first relative speed that correspond to the detection point in the two-dimensional spectrum, and each detection point set comprises a plurality of detection points; and
   when there is a detection point whose evaluation value is less than a first evaluation value threshold in a first detection point set, using the detection point whose evaluation value is less than the first evaluation value threshold as the target detection point, wherein the first detection point set is any one of the plurality of detection point sets; or

when there is no detection point whose evaluation value is less than the first evaluation value threshold in the first detection point set, using a detection point with a smallest evaluation value as the target detection point.

3. The method according to claim 2, wherein the first detection point set meets the following conditions: a difference between a maximum distance and a minimum distance is less than a distance threshold, and a difference between a maximum speed and a minimum speed is less than a speed threshold; and the first detection point set comprises a plurality of first detection points, the maximum distance is a first distance with a maximum value in feature information of the plurality of first detection points, the minimum distance is a first distance with a minimum value in the feature information of the plurality of first detection points, the maximum speed is a first relative speed with a maximum value in the feature information of the plurality of first detection points, and the minimum speed is a first relative speed with a minimum value in the feature information of the plurality of first detection points.

4. The method according to claim 1, wherein the selecting at least one target detection point from the plurality of detection points based on the evaluation values of the plurality of detection points comprises:

determining at least one energy threshold based on energy values of the plurality of detection points;

determining, in the plurality of detection points, at least one detection point associated with each energy threshold, wherein an energy value of at least one detection point associated with a first energy threshold is less than the first energy threshold, and the first energy threshold is any one of the at least one energy threshold; and when there is a detection point whose evaluation value is less than a second evaluation value threshold in the at least one detection point associated with the first energy threshold, using the detection point whose evaluation value is less than the second evaluation value threshold as the target detection point, wherein the second evaluation value threshold is an evaluation value corresponding to the first energy threshold; or

when there is no detection point whose evaluation value is less than the second evaluation value threshold in the at least one detection point associated with the first energy threshold, using a detection point with a smallest evaluation value as the target detection point.

5. The method according to any one of claims 1 to 4, wherein the determining evaluation values of the plurality of detection points based on the channel data of the plurality of detection points comprises:

determining a spatial spectrum of a second detection point based on channel data of the second detection point, and using a main lobe width or a side lobe depth of the spatial spectrum as an evaluation value of the second detection point, wherein the spatial spectrum indicates energy distribution of a signal at the second detection point;

extracting, from a spatial spectrum of a second detection point, an angle value of an angle of the second detection point relative to a normal direction of the radar sensor, determining a channel data component of the second detection point based on the angle value, and determining an evaluation value of the second detection point based on channel data of the second detection point and the channel data component of the second detection point, wherein the channel data component is channel data present when a propagation path between the radar sensor and the target object is a direct path, and the angle is an angle at which the propagation path between the radar sensor and the target object is a direct path;

determining an angle of departure and an angle of arrival of a signal at a second detection point based on channel data of the second detection point, and determining an absolute value of a difference between the angle of departure and the angle of arrival as an evaluation value of the second detection point; or

determining an energy standard deviation of a second detection point based on channel data of the second detection point and channel data of a detection point associated with the second detection point, and determining the energy standard deviation as an evaluation value of the second detection point, wherein the energy standard deviation indicates an energy fluctuation status of a signal at the second detection point, and the detection point associated with the second detection point is a detection point in a first specified range around the second detection point, wherein

the second detection point is any one of the plurality of detection points.

6. The method according to any one of claims 1 to 5, wherein before the determining evaluation values of the plurality of detection points based on the channel data of the plurality of detection points, the method further comprises:

determining that an energy value of each of the plurality of detection points is greater than a specified energy threshold.

7. A data processing apparatus, comprising an obtaining unit and a processing unit, wherein

the obtaining unit is configured to: obtain an echo signal obtained after a radar sensor transmits a signal to a target object, and determine a two-dimensional spectrum of the target object based on the echo signal, wherein the two-dimensional spectrum indicates relationships between both a first distance and a first relative speed and an energy value of the echo signal, the first distance is a relative distance between the radar sensor and the target object, and the first relative speed is a relative speed between the radar sensor and the target object; and

the processing unit is configured to: select a plurality of detection points from the two-dimensional spectrum; determine channel data of the plurality of detection points based on echo data of the plurality of detection points in the echo signal; determine evaluation values of the plurality of detection points based on the channel data of the plurality of detection points, wherein an evaluation value of any detection point is used to reflect accuracy of orientation information that is of the target object and that is determined based on channel data of the detection point; select at least one target detection point from the plurality of detection points based on the evaluation values of the plurality of detection points; and determine the orientation information of the target object based on channel data of the at least one target detection point.

8. The data processing apparatus according to claim 7, wherein the processing unit is specifically configured to:

cluster the plurality of detection points based on feature information of the plurality of detection points, to obtain a plurality of detection point sets, wherein feature information of any detection point indicates a first distance and a first relative speed that correspond to the detection point in the two-dimensional spectrum, and each detection point set comprises a plurality of detection points; and

when there is a detection point whose evaluation value is less than a first evaluation value threshold in a first detection point set, use the detection point whose evaluation value is less than the first evaluation value threshold as the target detection point, wherein the first detection point set is any one of the plurality of detection point sets; or

when there is no detection point whose evaluation value is less than the first evaluation value threshold in the first detection point set, use a detection point with a smallest evaluation value as the target detection point.

9. The data processing apparatus according to claim 8, wherein the first detection point set meets the following conditions: a difference between a maximum distance and a minimum distance is less than a distance threshold, and a difference between a maximum speed and a minimum speed is less than a speed threshold; and

the first detection point set comprises a plurality of first detection points, the maximum distance is a first distance with a maximum value in feature information of the plurality of first detection points, the minimum distance is a first distance with a minimum value in the feature information of the plurality of first detection points, the maximum speed is a first relative speed with a maximum value in the feature information of the plurality of first detection points, and the minimum speed is a first relative speed with a minimum value in the feature information of the plurality of first detection points.

10. The data processing apparatus according to claim 7, wherein the processing unit is specifically configured to:

determine at least one energy threshold based on energy values of the plurality of detection points;

determine, in the plurality of detection points, at least one detection point associated with each energy threshold, wherein an energy value of at least one detection point associated with a first energy threshold is less than the first energy threshold, and the first energy threshold is any one of the at least one energy threshold; and

when there is a detection point whose evaluation value is less than a second evaluation value threshold in the at least one detection point associated with the first energy threshold, use the detection point whose evaluation value is less than the second evaluation value threshold as the target detection point, wherein the second evaluation value threshold is an evaluation value corresponding to the first energy threshold; or

when there is no detection point whose evaluation value is less than the second evaluation value threshold in the at least one detection point associated with the first energy threshold, use a detection point with a smallest evaluation value as the target detection point.

11. The data processing apparatus according to any one of claims 7 to 10, wherein the processing unit is specifically configured to:

determine a spatial spectrum of a second detection point based on channel data of the second detection point, and use a main lobe width or a side lobe depth of the spatial spectrum as an evaluation value of the second detection point, wherein the spatial spectrum indicates energy distribution of a signal at the second detection point;

extract, from a spatial spectrum of a second detection point, an angle value of an angle of the second detection point relative to a normal direction of the radar sensor, determine a channel data component of the second detection point based on the angle value, and determine an evaluation value of the second detection point based on channel data of the second detection point and the channel data component of the second detection point, wherein the channel data component is channel data present when a propagation path between the radar sensor and the target object is a direct path, and the angle is an angle at which the propagation path between the radar sensor and the target object is a direct path;

determine an angle of departure and an angle of arrival of a signal at a second detection point based on the channel data of the second detection point, and determine an absolute value of a difference between the angle of departure and the angle of arrival as an evaluation value of the second detection point; or

determine an energy standard deviation of a second detection point based on channel data of the second detection point and channel data of a detection point associated with the second detection point, and determine the energy standard deviation as an evaluation value of the second detection point, wherein the energy standard deviation indicates an energy fluctuation status of a signal at the second detection point, and the detection point associated with the second detection point is a detection point in a first specified range around the second detection point, wherein

the second detection point is any one of the plurality of detection points.

12. The data processing apparatus according to any one of claims 7 to 11, wherein the processing unit is further configured to:

before determining the evaluation values of the plurality of detection points based on the channel data of the plurality of detection points, determine that an energy value of each of the plurality of detection points is greater than a specified energy threshold.

13. A data processing device, comprising a processor and a memory, wherein

the memory is configured to store computer program instructions; and
the processor is configured to read the computer program instructions stored in the memory, so that the data processing device is enabled to implement the method according to any one of claims 1 to 6.

14. A computer-readable storage medium, wherein the computer-readable storage medium stores a computer program, and when the computer program is run on a computer, the computer is enabled to perform the method according to any one of claims 1 to 6.

15. A chip, wherein the chip comprises a processor and a memory, the processor is coupled to the memory, and the processor is configured to read a computer program stored in the memory, so that the chip is enabled to perform the method according to any one of claims 1 to 6.

FIG. 1

FIG. 2

FIG. 3

FIG. 4

A data processing device obtains an echo signal obtained after a radar sensor transmits a signal to a target object, and determines a two-dimensional spectrum of the target object based on the echo signal ⟋ S501

The data processing device selects a plurality of detection points from the two-dimensional spectrum ⟋ S502

The data processing device determines channel data of the plurality of detection points based on echo data of the plurality of detection points in the echo signal ⟋ S503

The data processing device determines evaluation values of the plurality of detection points based on the channel data of the plurality of detection points ⟋ S504

The data processing device selects at least one target detection point from the plurality of detection points based on the evaluation values of the plurality of detection points ⟋ S505

The data processing device determines orientation information of the target object based on channel data of the at least one target detection point ⟋ S506

FIG. 5

FIG. 6a

FIG. 6b

FIG. 6c

Data processing module of a radar sensor

Controller of a vehicle

S701: Obtain an echo signal obtained after the radar sensor transmits a signal to a target object, and determine a two-dimensional spectrum of the target object based on the echo signal

S702: Select a plurality of detection points from the two-dimensional spectrum

S703: Determine channel data of the plurality of detection points based on echo data of the plurality of detection points in the echo signal

S704: Determine evaluation values of the plurality of detection points based on the channel data of the plurality of detection points

S705: Cluster the plurality of detection points based on feature information of the plurality of detection points, to obtain a plurality of detection point sets

S706: Determine a target detection point in each detection point set

S707: Determine orientation information of the target object based on channel data of at least one target detection point in a plurality of target detection points

S708: Send, by using a transmission module of the radar sensor, the orientation information of the target object to the controller of the vehicle on which the radar sensor is disposed

S709: The controller of the vehicle determines or adjusts a location and/or route planning of the vehicle based on the orientation information of the target object

FIG. 7

```
┌─────────────────┐                                    ┌─────────────────┐
│ Data processing │                                    │  Controller of a│
│  module of a    │                                    │    vehicle      │
│  radar sensor   │                                    │                 │
└─────────────────┘                                    └─────────────────┘
```

S801: Obtain an echo signal obtained after the radar sensor transmits a signal to a target object, and determine a two-dimensional spectrum of the target object based on the echo signal

S802: Select a plurality of detection points from the two-dimensional spectrum

S803: Determine channel data of the plurality of detection points based on echo data of the plurality of detection points in the echo signal

S804: Determine evaluation values of the plurality of detection points based on the channel data of the plurality of detection points

S805: Determine at least one energy threshold based on energy values of the plurality of detection points

S806: Determine, in the plurality of detection points, at least one detection point associated with each energy threshold

S807: Determine a target detection point in the at least one detection point associated with each energy threshold

S808: Determine orientation information of the target object based on channel data of at least one target detection point in a plurality of target detection points

S809: Send, by using a transmission module of the radar sensor, the orientation information of the target object to the controller of the vehicle on which the radar sensor is disposed

S810: The controller of the vehicle determines or adjusts a location and/or route planning of the vehicle based on the orientation information of the target object

FIG. 8

| Radar sensor | Electronic device | Controller of a vehicle |
|---|---|---|

S901: Transmit a signal to a target object, and then obtain an echo signal

S902: Send the echo signal

S903: Determine orientation information of the target object based on the echo signal

S904: Send the orientation information of the target object

S905: Determine or adjust a location and/or route planning of the vehicle based on the orientation information of the target object

FIG. 9

1001

1002

| Obtaining unit | Processing unit |
|---|---|

FIG. 10

Data processing module

1101

Processor

1102

Memory

FIG. 11

Electronic device

1201

Processor

1203

Communication module

1202

Memory

FIG. 12

## INTERNATIONAL SEARCH REPORT

| International application No. |
| --- |
| **PCT/CN2023/077953** |

### A. CLASSIFICATION OF SUBJECT MATTER

G01S 13/60(2006.01)i

According to International Patent Classification (IPC) or to both national classification and IPC

### B. FIELDS SEARCHED

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNTXT, CNABS, CNKI, ENTXT: 雷达, 回波, 频谱, 距离, 速度, 能量, 功率, 检测点, 通道, 准确度, 精度, 方位, radar, echo, reflector, speed, distance, angle, frequency, detection, point, quality, waveform, frequency, spectrogram

### C. DOCUMENTS CONSIDERED TO BE RELEVANT

| Category* | Citation of document, with indication, where appropriate, of the relevant passages | Relevant to claim No. |
| --- | --- | --- |
| A | CN 114767087 A (INNOPRO TECHNOLOGY CO., LTD.) 22 July 2022 (2022-07-22) description, paragraphs 12-51, and figure 1 | 1-15 |
| A | CN 112233416 A (BEIJING JULI TECHNOLOGY CO., LTD.) 15 January 2021 (2021-01-15) entire document | 1-15 |
| A | CN 112673278 A (HUAWEI TECHNOLOGIES CO., LTD.) 16 April 2021 (2021-04-16) entire document | 1-15 |
| A | CN 114706065 A (XAG CO., LTD.) 05 July 2022 (2022-07-05) entire document | 1-15 |
| A | DE 102017204495 A1 (ROBERT BOSCH GMBH) 20 September 2018 (2018-09-20) entire document | 1-15 |
| A | WO 2019216469 A1 (SEOUL NATIONAL UNIVERSITY R&DB FOUNDATION) 14 November 2019 (2019-11-14) entire document | 1-15 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **13 November 2023** | **14 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/077953**

| Patent document cited in search report | | | Publication date (day/month/year) | Patent family member(s) | | | Publication date (day/month/year) |
|---|---|---|---|---|---|---|---|
| CN | 114767087 | A | 22 July 2022 | None | | | |
| CN | 112233416 | A | 15 January 2021 | None | | | |
| CN | 112673278 | A | 16 April 2021 | None | | | |
| CN | 114706065 | A | 05 July 2022 | None | | | |
| DE | 102017204495 | A1 | 20 September 2018 | KR | 20190125452 | A | 06 November 2019 |
| | | | | KR | 102445130 | B1 | 21 September 2022 |
| | | | | US | 2021132212 | A1 | 06 May 2021 |
| | | | | US | 11249180 | B2 | 15 February 2022 |
| | | | | JP | 2020509390 | A | 26 March 2020 |
| | | | | JP | 6821051 | B2 | 27 January 2021 |
| | | | | EP | 3596488 | A1 | 22 January 2020 |
| | | | | EP | 3596488 | B1 | 09 March 2022 |
| | | | | WO | 2018166683 | A1 | 20 September 2018 |
| | | | | KR | 20190125452 | A | 06 November 2019 |
| | | | | KR | 102445130 | B1 | 21 September 2022 |
| | | | | US | 2021132212 | A1 | 06 May 2021 |
| | | | | US | 11249180 | B2 | 15 February 2022 |
| | | | | JP | 2020509390 | A | 26 March 2020 |
| | | | | JP | 6821051 | B2 | 27 January 2021 |
| | | | | EP | 3596488 | A1 | 22 January 2020 |
| | | | | EP | 3596488 | B1 | 09 March 2022 |
| | | | | WO | 2018166683 | A1 | 20 September 2018 |
| WO | 2019216469 | A1 | 14 November 2019 | KR | 20190129622 | A | 20 November 2019 |
| | | | | KR | 102099851 | B1 | 10 April 2020 |
| | | | | KR | 20190129622 | A | 20 November 2019 |
| | | | | KR | 102099851 | B1 | 10 April 2020 |